# EUROPÄISCHE PATENTSCHRIFT

(11) **EP 0 798 389 B1**
(45) Veröffentlichungstag und Bekanntmachung des Hinweises auf die Patenterteilung: **05.06.2002**
(21) Anmeldenummer: 97810114.5
(22) Anmeldetag: 03.03.1997
(51) Int. Cl.: C21C 5/52, F27B 3/18, F27D 3/00, F27D 3/08

(54) **Verfahren zum Betreiben eines Lichbogenofens und Lichtbogenofen**
Method of operating an arc furnace and arc furnace
Procédé de conduite d'un feu à arc et feu à arc

(30) Priorität: 28.03.1996 DE 19612383
(43) Veröffentlichungstag der Anmeldung: 01.10.1997
(73) Patentinhaber: CONCAST STANDARD AG, 8027 Zürich (CH)
(72) Erfinder: Loebner, Andreas, 3037 Herrenschwanden (CH); Ölscher, Jan, CH-8934 Knonau (CH); Stenkvist, Sven-Einar, 5200 Brugg (CH)
(74) Vertreter: Zeller, Josef

(56) Entgegenhaltungen:
- EP-A- 0 637 634
- DE-A- 2 644 408
- DE-B- 2 333 022
- DE-B- 2 459 253
- GB-A- 811 803
- SE-B- 448 025
- "DER GLEICHSTROM-LICHTBOGEN-OFEN, EIN KOSTENGUENSTIGES SCHMELZAGGREGAT" ABB TECHNIK, Nr. 10, 1992, Seiten 3-10, XP000671369
- PATENT ABSTRACTS OF JAPAN vol. 009, no. 134 (C-285), 8.Juni 1985 & JP 60 021314 A (SHIN NIPPON SEITETSU KK), 2.Februar 1985,

## Beschreibung

### TECHNISCHES GEBIET

Bei der Erfindung wird ausgegangen von einem Lichtbogenofen nach dem Oberbegriff des Patentanspruchs 1 und von einem Verfahren zum Betrieb eines Lichtbogenofens nach dem Oberbegriff des Patentanspruchs 8.

### STAND DER TECHNIK

Mit dem Oberbegriff der Patentansprüche 1 und 8 nimmt die Erfindung auf einen Stand der Technik Bezug, wie er aus der Schweizer Firmenzeitschrift ABB Technik, 10/1992, S. 3 - 10, bekannt ist. Dort wird zum Einschmelzen von Schrott eine massive Elektrode aus Graphit in einem Gleichstrom-Lichtbogenofen verwendet, wobei der Ofendeckel beweglich und das Ofengefäss kippbar sind, zum Abkippen der Schlacke und der fertigen Schmelze. Wird der Gleichstrom-Lichtbogenofen als Reduktionsofen für kontinuierliches Chargieren und Verarbeiten von Feinchargen verwendet, so erfolgt dessen Beschickung entweder durch eine zentrale Öffnung in der Elektrode direkt in das Plasma des Lichtbogenofens oder durch eine oder mehrere Chargiertüren neben der Elektrode. Im Falle einer Beschickung einer vorgemischten, feinkörnigen Charge durch die Hohlelektrode wird der Beschickungs-Mengenstrom so gesteuert, dass stets das Gleichgewicht zur Lichtbogenleistung gehalten werden kann. Das 2teilige Beschickungsrohr weist eine Schnelltrennkupplung auf und ist von einem Einfülltrichter der Hohlelektrode elektrisch isoliert. Die Beschickungseinrichtung kann zum Abkuppeln des unteren Teiles des Beschickungsrohres zur Seite geschwenkt werden. Dieser Ofen hat einen festen Deckel und einen feststehenden Kessel. Das Metall und die Schlacke werden durch Abstichlöcher in verschiedenen Höhen abgezogen. Der Ofentransformator ist so ausgelegt, dass er die Nennleistung über einen ausgedehnten Spannungs- und Strombereich liefert und der Lichtbogenofen so mit Vollast gefahren werden kann. Das Stromversorgungssystem muss also hinreichend flexibel ausgelegt sein, damit dieses Optimum im praktischen Betrieb eingestellt werden kann. In der Regel werden am Transformator 4 oder 5 Anzapfungen vorgesehen, um diesen Bereich abdecken zu können. Lichtbogenöfen für Reduktionsprozesse sind nicht kippbar und haben einen fest montierten Deckel.

Zum einschlägigen Stand der Technik wird noch auf die EP 0 058 774 B1 verwiesen, aus der bereits ein kippbarer Lichtbogenofen mit mehreren Vollelektroden zur Stahlherstellung bekannt ist, bei dem ebenfalls Schüttgut von einem Schüttgutbehälter über einen Schüttgutförderer in den Lichtbogenofen gebracht wird. Dabei ist der Schüttgutbehälter elektrodenfern am Schüttgutförderer angeordnet.

Aus der EP 0 637 634 A1 ist ein Verfahren zum Herstellen einer Stahlschmelze in einem Lichtbogenofen bekannt, bei dem feinkörnige Feststoffe und/oder Gase durch eine Hohlelektrode unmittelbar in den Lichtbogen gelangen, um über die Flachbadperiode einen von Schaumschlacke umhüllten Lichtbogen zu erzielen. Zur Schaumschlackenbildung kann auch Filterstaub zugeführt werden.

### DARSTELLUNG DER ERFINDUNG

Die Erfindung, wie sie in den Patentansprüchen 1 und 8 definiert ist, löst die Aufgabe, einen Lichtbogenofen, insbesondere zur Stahlherstellung, und ein Verfahren zum Betreiben eines Lichtbogenofens der eingangs genannten Art derart weiterzuentwickeln, dass eine einfache Beschickung des Lichtbogenofens durch die Höhlelektrode und/oder eine Verbesserung des Wirkungsgrades des Lichtbogenofens resultiert.

Vorteilhafte Ausgestaltungen der Erfindung sind in den abhängigen Patentansprüchen definiert.

Der Hauptvorteil der Erfindung besteht in einer höheren Leistungsdichte des Lichtbogenofens infolge eines kürzeren Lichtbogens.

Da die Zuschlagstoffe eine deionisierende Wirkung auf die Plasmazone haben, in welcher der Lichtbogen brennt, verkürzt sich der Lichtbogen bei gleicher Spannung und gleichem Strom. Dadurch wird die seitliche Wärmestrahlung im Verhältnis zur Wärmestrahlung in Richtung Schmelze geringer, abhängig von der Körnung, Zuführrate und der Materialart der Zuschlagstoffe.

Bei gleicher Lichtbogenlänge kann so mit einer grösseren Spannung gearbeitet werden. Dadurch kann der Lichtbogenofen bei gleichem Elektrodendurchmesser (gleichem Strom) mit einer höheren elektrischen Leistung gefahren werden. Heisse Schmelzstellen (hot spots) werden somit harmloser.

Ein weiterer Vorteil der Erfindung besteht darin, dass eine geringere Belastung der Hohlelektrode sowie der Innenauskleidung des Lichtbogenofens erreicht wird. Dünnere Elektroden ermöglichen eine überproportionale Kosteneinsparung.

Die Zuschlagstoffe, die für die metallurgischen Prozesse nötig sind, werden an der optimalen Stelle zugeführt. Da z.B. Kohlenstoff nicht unnötig verstreut werden muss, gehen die Abgase zurück.

Verwendet man als Zuschlagstoffe zumindest einen Teil derjenigen Stoffe, die ohnedies chargiert werden müssen, wie z.B. Kalk und Kohle, so werden diese besonders effektiv eingesetzt.

Es wird ein fast kostenloser Weg zum Aufarbeiten problematischer Abfälle eröffnet. Den Zuschlagstoffen können Stahlwerksabfälle, wie z. B. Filterstaub, zugesetzt werden, die dadurch unproblematisch entsorgt werden können.

Gemäß einer vorteilhaften Ausgestaltung der Erfindung kann ein Gasaustritt aus der Hohlelektrode verhindert werden.

Beim Kippen des Lichtbogenofens in seine Endstellungen sowie beim Schwenken der Hohlelektrode und des Ofendeckels ist kein zusätzlicher Bedienungsaufwand erforderlich. Zuschlagstoffe können-in allen Kippstellungen des Lichtbogenofens bei Schmelzbetrieb in die Hohlelektrode eingefüllt werden.

### KURZE BESCHREIBUNG DER ZEICHNUNGEN

Die Erfindung wird nachstehend anhand von Ausführungsbeispielen erläutert. Es zeigen:
- Fig. 1: einen mit Schrott gefüllten Lichtbogenofen mit einer herkömmlichen Fördereinrichtung für Zuschlagstoffe und einer Fördereinrichtung, welche Zuschlagstoffe in eine Hohlelektrode des Lichtbogenofens fördert,
- Fig. 2: einen kippbaren Lichtbogenofen mit 2 über einen Schlauch verbundenen Vorratsilos für Zuschlagstoffe,
- Fig. 3: den Lichtbogenofen von Fig. 2 mit einer Elektrodenverstelleinrichtung und einem daran angelenkten Schüttgutförderer,
- Fig. 4: einen Schüttgutförderer gemäß Fig. 3 im Detail,
- Fig. 5 - 7: Lichtbogenöfen mit unterschiedlichen Schrott-Füllzuständen und
- Fig. 8 und 9: Schmelzleistungsdiagramme für einen Schmelzzyklus ohne und mit Zufuhr von Zuschlagstoffen im Schmelzzustand gemäß Fig. 6.

### WEGE ZUR AUSFÜHRUNG DER ERFINDUNG

In den Figuren sind gleiche Teile mit gleichen Bezugszeichen gekennzeichnet.

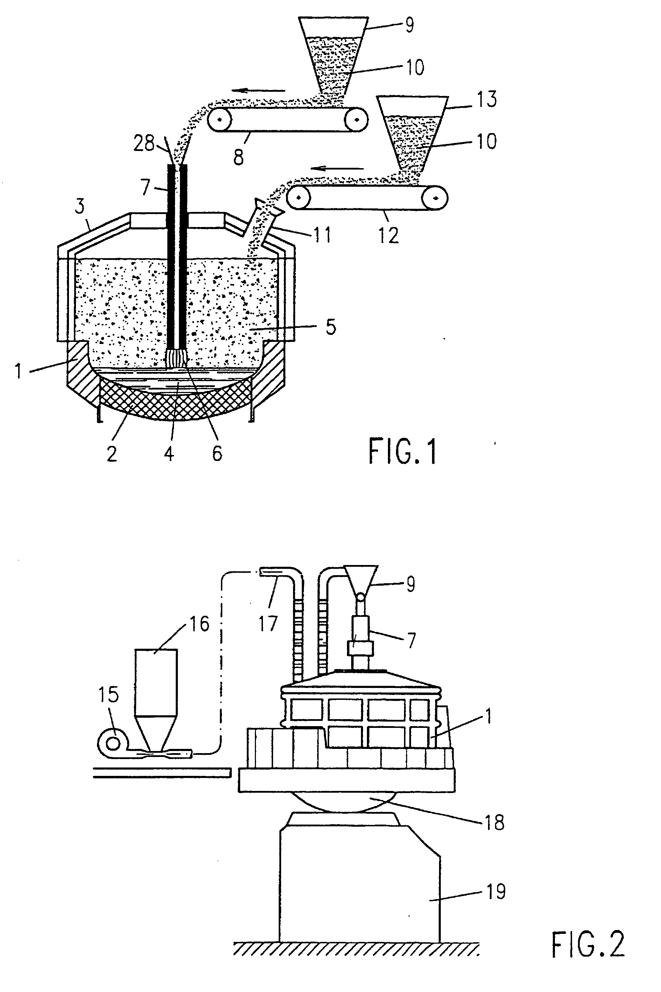

Fig. 1 zeigt einen Gleichstromlichtbogenofen bzw. Lichtbogenofen (1) mit einer Badelektrode (2), einem abnehmbaren Ofendeckel (3) mit einer zentralen Öffnung zum Durchführen einer Hohlelektrode (7) und mit einer herkömmlichen Beschickungsöffnung (11) für die Zufuhr von Zuschlagstoffen (10). Zwischen der Hohlelektrode (7) und einer Stahlschmelze bzw. Schmelze (4) brennt ein Lichtbogen (6), der Schrott (5) zum Schmelzen bringt. Der Schrott (5) wird vor Beginn des Schmelzprozesses bei geöffnetem Ofendeckel (3) in den Lichtbogenofen (1) chargiert. Aus einem 1. Schüttgutbehälter (9) für Zuschlagstoffe (10), z. B. Kohle und Kalk, werden diese über eine 1. Fördereinrichtung (8) in eine Einfüllöffnung (28) der Hohlelektrode (7) gefördert. Wichtig ist, daß der Schüttgutbehälter (9) elektrodenfern angeordnet und damit thermisch wenig belastet ist. Zuschlagstoffe (10) werden ferner aus einem Behälter (13) über eine weitere Fördereinrichtung (12) zur Beschickungsöffnung (11) gefördert.

Fig. 2 zeigt einen Lichtbogenofen (1) gemäß Fig. 1, aus der ersichtlich ist, daß die Zuschlagstoffe (10) mittels eines pneumatischen Schüttgutförderers bzw. Druckgebläses (15) von einem Schüttgutvorratsbehälter bzw. 2. Schüttgutbehälter (16) über eine Schlauchverbindung bzw. durch einen Schlauch (17) in den 1. Schüttgutbehälter (9) gefördert wird. Statt eines Druckgebläses (15) kann z. B. auch ein in der Fördertechnik üblicher Saugförderer oder ein Pfropfenförderer verwendet werden. Der Schüttgutbehälter (9) ist senkrecht zur Zeichenebene hinter der Hohlelektrode (7) und in einem Abstand zu dieser angeordnet, gemäß Fig. 1. Mit (18) ist eine Wiege des Lichtbogenofens (1) bezeichnet, welche ein Abrollen des Lichtbogenofens (1) auf einer ebenen Auflagefläche eines Ofenfundamentes (19) und somit ein Kippen des Lichtbogenofens (1) ohne zusätzlichen Bedienungsaufwand ermöglicht.

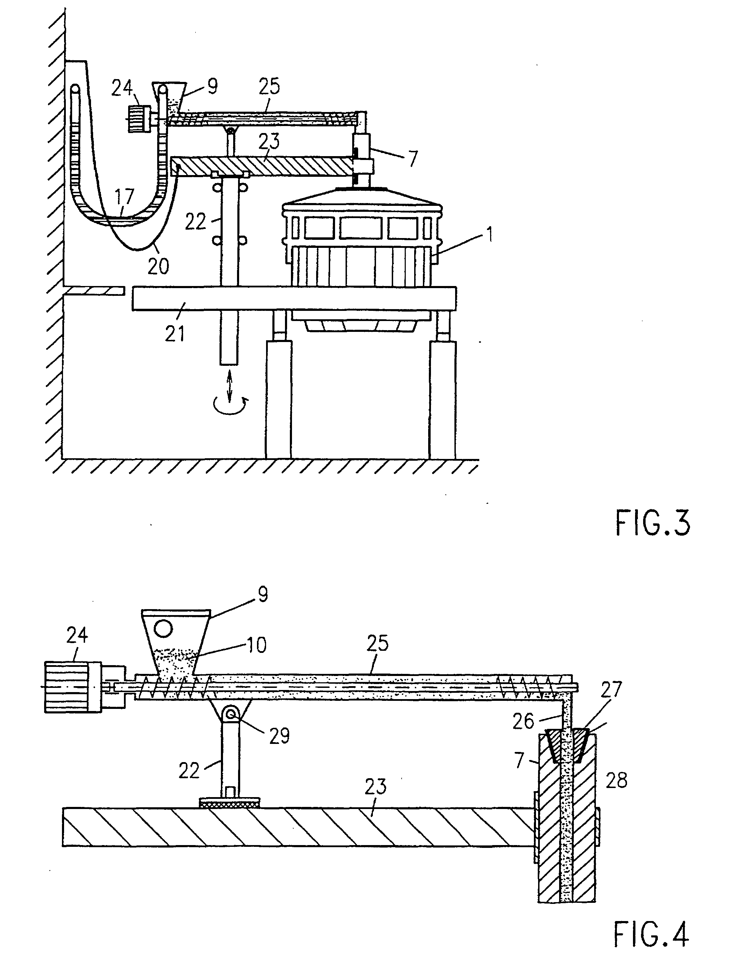

Fig. 3 zeigt einen kippbaren Lichtbogenofen (1) und eine Elektrodenverstelleinrichtung (22), die in einer Ofenplattform (21) drehbar und in der Höhe verstellbar angeordnet ist. Die Elektrodenverstelleinrichtung (22) weist einen horizontalen Elektrodentragarm (23) auf, der einerseits mit einer Stromzuführung (20) und andererseits mit der Hohlelektrode (7) mechanisch und elektrisch verbunden ist. Gleichzeitig ist sie, elektrisch isoliert, über ein Drehgelenk (29) mit einem näher aus Fig. 4 ersichtlichen Schüttgutförderer (25) verbunden. Dieser fördert die Zuschlagstoffe (10) aus dem Schüttgutbehälter (9) mittels eines in seiner Drehzahl einstellbaren Motors (24) und eines daran angeschlossenen Schneckenantriebes zu einem endseitig angebrachten Elektrodeneinfüllrohr (26). Dieses ist in eine zentrale Öffnung in einem elektrisch isolierenden, hohlen Einfüllpfropfen (27) geführt, welcher gasdicht in der Einfüllöffnung (28) der Hohlelektrode (7) sitzt und leicht durch Drehen des Schüttgutförderers (25) um das Drehgelenk (29) von der Hohlelektrode (7) getrennt werden kann. Der Schüttgutförderer (25) läßt sich nun leicht wegschwenken, so daß ein Ersetzen einer Hohlelektrode (7) nicht behindert wird. An der warmen Hohlelektrode (7) befindet sich nur ein Stützlager, während die empfindlichen Teile (Motor (24) und nicht dargestellte Niveausensoren) am kalten Ende des Schüttgutförderers (25) angebracht sind. Der Schüttgutförderer (25) kann auch auf dem Potential der Hohlelektrode (7) liegen; in diesem Fall sorgt der Schlauch (17) für eine elektrische Trennung zum Schüttgutbehälter (16).

Wichtig ist, daß die Zuschlagstoffe (10) aus einem feststehenden Schüttgutvorratsbehälter (16) in ein Zwischensilo (9) transportiert werden, das am hinteren Ende des mit dem Elektrodentragarm (23) mitbewegten Schüttgutförderers (25) angebracht ist.

Es versteht sich, daß anstelle eines Druckgebläses (15) eine teleskopartige Rohrrutsche oder eine andere Förderungsanlage verwendet werden kann, die entweder in ein längliches Silo oder an den Enden Gelenke aufweist (nicht dargestellt).

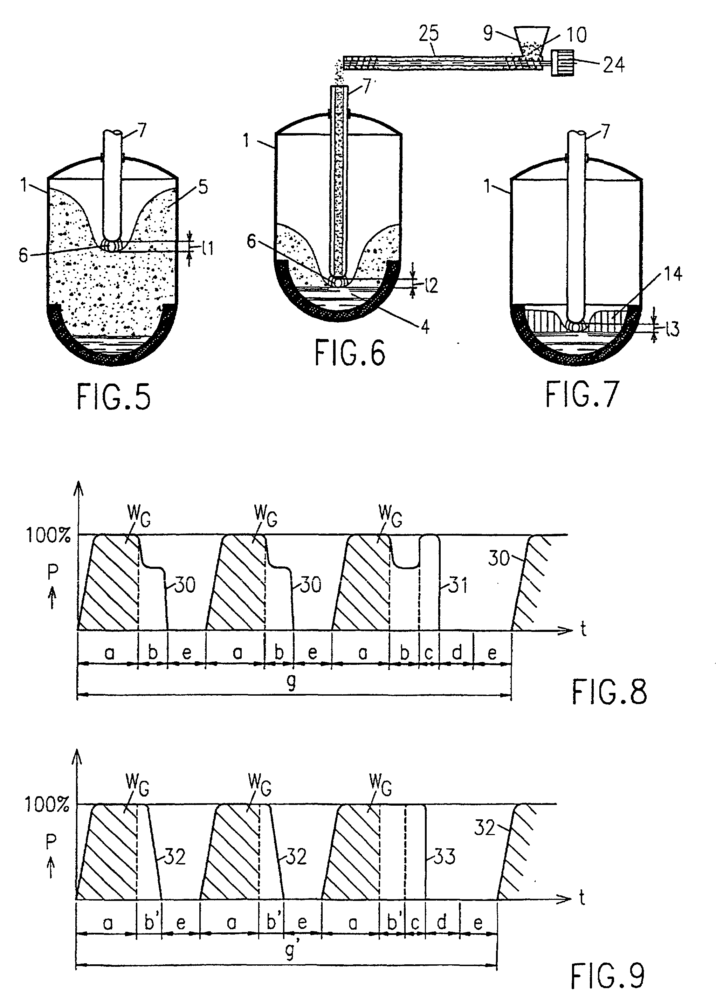

Die Fig. 5 - 7 zeigen unterschiedliche Füllzustände des Lichtbogenofens (1) mit Schrott (5), Fig. 5 in gefülltem Zustand mit einer Länge (11) des Lichtbogens (6) von etwa 60 cm, Fig. 6 in einem zu über 50 % abgebrannten Zustand mit einer Länge (12) des Lichtbogens (6) von etwa 30 cm und Fig. 7 in abgebranntem Zustand mit einer Länge (13) des Lichtbogens (6) von etwa 30 cm. Nur bei teilweise abgebranntem Füllzustand gemäß Fig. 6 werden Zuschlagstoffe (10) durch die Hohlelektrode (7) gefördert, wodurch sich die Lichtbogenlänge (11) auf (12) verkürzt. Dadurch kann eine spezifische Schmelzleistung (P), vgl. Fig. 9, auf hohe Werte gebracht werden, ohne daß Ofenbauteile gefährdet werden.

In einer Anfangsphase (a) des Schmelzens gemäß Fig. 5, in welcher der Lichtbogenofen (1) vollständig mit Schrott (5) gefüllt ist, gelangt die Energie des Lichtbogens (6) nicht an die Ofenwände. In einer Endphase (c) des Schmelzens gemäß Fig. 7 ist der Schrott (5) vollständig eingeschmolzen, und das Stahlbad (4) wird durch eine schäumende Schlacke (14) abgedeckt, die auch den Lichtbogen (6) umhüllt. In einer kritischen Phase (b) des Schmelzens gemäß Fig. 6, in welcher der Schrott (5) soweit heruntergeschmolzen ist, daß die inneren Seitenwände des Lichtbogenofens (1) nicht mehr vollständig durch Schrott (5) abgedeckt werden, aber auch noch nicht genügend Schmelze (4) vorhanden ist, um eine schäumende Schlacke (14) zu erzeugen, geht, ohne Schutzmaßnahme, ein großer Teil der Energie des Lichtbogens (6) verloren bzw. führt zu Schäden der inneren Seitenwände des Lichtbogenofens (1). Um diese Schäden zu vermeiden, muß die Leistung des Lichtbogens (6) zurückgenommen werden, was eine spezifische elektrische Schmelzleistung (P) reduziert, vgl. Fig. 8.

In den Fig. 8 und 9 sind auf den Ordinaten die relative, spezifische, elektrische Schmelzleistung (P) je Tonne zu schmelzendes Gut (5) in % und auf der Abszisse die Zeit (t) in willkürlichen Einheiten aufgetragen.

Fig. 8 zeigt 2 aufeinanderfolgende gleiche Leistungskurven (30) mit je einer gleich langen Anfangsphase (a), in welcher die Schmelzleistung (P) von 0 auf 100 % ansteigt und bis zum Erreichen eines vorgebbaren Energiegrenzwertes (W_{G}), der durch die schraffierten Flächen unterhalb der Leistungskurven (30 - 33) in der Anfangsphase (a) dargestellt ist, etwa konstant gehalten wird. In den jeweils darauf folgenden, etwa gleich langen kritischen Phasen (b), ohne Zufuhr von Zuschlagstoffen (10), wird die Schmelzleistung (P) auf ein reduziertes Leistungsniveau geregelt, um die Ofenwände zu schützen, und schließlich auf 0. Den kritischen Phasen (b) schließt sich jeweils eine Schrott-Nachfüllphase (e) an. Eine anschließende 3. Leistungskurve (31) unterscheidet sich von den Leistungskurven (30) durch die abschließende Endphase (c), in welcher die Schmelzleistung (P) von dem reduzierten Leistungsniveau auf nahe 100 % ansteigt und schließlich auf 0 geregelt wird. Danach folgt eine Schmelzablaßphase (d) und dann wieder eine Schrott-Nachfüllphase (e), welche einen Schmelzzyklus (g) mit 3 Schrott-Nachfüllphasen (e) abschließt.

Fig. 9 zeigt ein der Fig. 8 entsprechendes Leistungsdiagramm bei Zufuhr von Zuschlagstoffen (10) während der reduzierten kritischen Phasen (b'), welche die kritischen Phasen (b) gemäß Fig. 8 ersetzen, so daß insgesamt eine reduzierte Schmelzzyklusdauer (g') resultiert, vgl. die Leistungskurven (32) - - (33), welche den Leistungskurven (30) - (31) gemäß Fig. 8 entsprechen. Mit der Zufuhr von Zuschlagstoffen (10) wird begonnen, sobald die verbrauchte Schmelzenergie den vorgebbaren Energiegrenzwert (W_{G}) erreicht, so daß praktisch kein Leistungsabfall resultiert. Dieser Energiegrenzwert (W_{G}) liegt im Bereich von 30 % - 90 %, vorzugsweise im Bereich von 60 % - 70 % der Gesamtschmelzenergie je Schrottfüllung. Bei der letzten Schrottfüllung je Schmelzzyklus kann die Zufuhr der Zuschlagstoffe (10) eingestellt werden, wenn die schäumende Schlackephase erreicht wird, was bei etwa 90 % der Gesamtschmelzenergie der Fall sein kann.

### Beispiel:

Bei einer Schmelze mit 3 Schrott-Nachfüllphasen (e) konnte die Schmelzzyklusdauer (g) von bisher 60 min um 5 min verkürzt werden, was bei einem Lichtbogenofen (1) mit einer Schrottfüllung von 100 t und einem Betrieb an 320 Arbeitstagen eine Produktionserhöhung von 8 %, d. h. von 770 kt/a auf 830 kt/a ergibt. Der Energieverbrauch sank um 40 kWh/t. Der Endverbrauch an Hohlelektroden (7) sank um 0,2 kg/t Stahl.

### BEZEICHNUNGSLISTE

- 1: Lichtbogenofen
- 2: Badelektrode
- 3: Ofendeckel von 1
- 4: Schmelze, Stahlschmelze
- 5: zu schmelzendes Gut, Schrott in 1
- 6: Lichtbogen
- 7: Hohlelektrode
- 8, 12: Fördereinrichtungen
- 9: 1. Schüttgutbehälter, Zwischensilo
- 10: Schüttgut, Zuschlagstoffe
- 11: Beschickungsöffnung in 3
- 13: Behälter für Zuschlagstoffe
- 14: schäumende Schlacke (14)
- 15: Druckgebläse
- 16: 2. Schüttgutbehälter, Schüttgutvorratsbehälter
- 17: Schlauchverbindung, Schlauch
- 18: sphärischer Boden von 1
- 19: Ofenfundament
- 20: Stromzuführung zu 7
- 21: Ofenplattform
- 22: Elektrodenverstelleinrichtung
- 23: Elektrodentragarm
- 24: Motor
- 25: Schüttgutförderer
- 26: Elektrodeneinfüllrohr
- 27: hohler Einfüllpfropfen
- 28: Einfüllöffnung von 7
- 29: Drehgelenk
- 30 - 33: Leistungskurven

- a: Anfangsphase des Schmelzens
- b: kritische Schmelzphase ohne Schüttgutzufuhr
- b': Schmelzphase mit Schüttgutzufuhr, reduzierte kritische Phase
- c: Endphase des Schmelzens
- d: Schmelzablaßphase
- e: Schrott-Nachfüllphase
- g, g': Schmelzzyklusdauern
- l1 - l3: Lichtbogenlängen
- P: spezifische elektrische Schmelzleistung je Tonne Schmelzgut
- t: Zeit
- W_{G}: Energiegrenzwert

## Patentansprüche

1. Lichtbogenofen (1), insbesondere zur Stahlherstellung,
a) mit einer Hohlelektrode (7) und
b) einem 1. Schüttgutförderer (8, 25) zum Zuführen von Schüttgut (10) von einem 1. Schüttgutbehälter (9) zu einer Einfüllöffnung (28) der Hohlelektrode (7),
c) wobei der 1. Schüttgutbehälter (9) elektrodenfern angeordnet ist,
**dadurch gekennzeichnet**,
d) dass der 1. Schüttgutbehälter (9) am hinteren Ende des mit einem Elektrodenarm (23) mitbewegten 1. Schüttgutförderers (8, 25) angebracht ist.

2. Lichtbogenofen (1) nach Anspruch 1, **dadurch gekennzeichnet, dass** der 1. Schüttgutförderer (8, 25) mit einer höhenverstellbaren und drehbaren oder kippbaren Elektrodenverstelleinrichtung (22) für die Hohlelektrode (7) gelenkig verbunden ist.

3. Lichtbogenofen (1) nach Anspruch 1 oder 2, **dadurch gekennzeichnet, dass** der 1. Schüttgutförderer (8, 25) über einen elektrisch isolierenden, hohlen Einfüllpfropfen (27) mit der Einfüllöffnung (28) der Hohlelektrode (7) in gasdichter, lösbarer Verbindung steht.

4. Lichtbogenofen (1) nach einem der Ansprüche 1 bis 3, **dadurch gekennzeichnet, dass** der 1. Schüttgutförderer (8, 25) über eine Fördereinrichtung (15, 17) mit einem 2. Schüttgutbehälter (16) in Verbindung steht.

5. Lichtbogenofen (1) nach einem der Ansprüche 1 bis 4, **dadurch gekennzeichnet, dass** der 1. Schüttgutförderer (8, 25) über einen elektrisch isolierenden Schlauch (17) mit einem 2. Schüttgutbehälter (16) in Verbindung steht.

6. Lichtbogenofen (1) nach einem der Ansprüche 1 bis 5, **dadurch gekennzeichnet, dass** das Schüttgut mindestens einen Zuschlagstoff (10) enthält.

7. Lichtbogenofen (1) nach einem der Ansprüche 1 bis 6, **dadurch gekennzeichnet, dass** der Lichtbogenofen (1) kippbar oder drehbar ist.

8. Verfahren zum Betreiben eines Lichtbogenofens (1) gemäss Anspruch 1, insbesondere zur Stahlherstellung,
a) wobei festes zu schmelzendes Gut (5) und mindestens ein Zuschlagstoff (10) mittels eines Lichtbogens (6) der Hohlelektrode (7) zu einer flüssigen Schmelze (4) geschmolzen werden,
**dadurch gekennzeichnet**,
b) dass während einer kritischen Schmelzphase (b'), bei welcher das zu schmelzende Gut (5) im Lichtbogenofen (1) teilweise abgeschmolzen ist, mindestens ein Zuschlagstoff (10) durch die Hohlelektrode (7) in die Schmelze (4) gefördert wird.

9. Verfahren nach Anspruch 8, **dadurch gekennzeichnet, dass** die Zufuhr des mindestens einen Zuschlagstoffes (10) beginnt, nachdem eine vorgebbare elektrische Schmelzenergie (W_{G}) im Bereich von 30 %- 90 % der Gesamtschmelze je Schrottfüllung erreicht wurde.

10. Verfahren nach Anspruch 8, **dadurch gekennzeichnet, dass** die Zufuhr des mindestens einen Zuschlagstoffes (10) beginnt, nachdem eine vorgebbare elektrische Schmelzenergie (W_{G}) im Bereich von 60 %- 70 % der Gesamtschmelzenergie je Schrottfüllung erreicht wurde.

## Claims

1. Arc furnace (1), particularly for steelmaking,
a) comprising a hollow electrode (7) and
b) a first loose-material conveyor (8, 25) for feeding loose material (10) from a first loose-material container (9) to a filling opening (28) of the hollow electrode (7),
c) the first loose-material conveyor (9) being arranged at a distance from the electrode,
**characterized**
d) in that the first loose-material container (9) is attached at the rear end of the first loose-material conveyor (8, 25) moving together with an electrode arm (23).

2. Arc furnace (1) according to Claim 1, **characterized in that** the first loose-material conveyor (8, 25) is pivotally connected to a vertically adjustable and rotatable or tiltable electrode adjustment device (22) for the hollow electrode (7).

3. Arc furnace (1) according to Claim 1 or 2, **characterized in that** the first loose-material conveyor (8, 25) is gastightly and detachably connected to the filling opening (28) of the hollow electrode (7) via an electrically insulating, hollow filler stopper (27).

4. Arc furnace (1) according to one of Claims 1 to 3, **characterized in that** the first loose-material conveyor (8, 25) is connected to a second loose-material container (16) via a conveyor device (15, 17).

5. Arc furnace (1) according to one of Claims 1 to 4, **characterized in that** the first loose-material conveyor (8, 25) is connected to a second loose-material container (16) via an electrically insulating hose (17).

6. Arc furnace (1) according to one of Claims 1 to 5, **characterized in that** the loose material contains at least one additive (10).

7. Arc furnace (1) according to one of Claims 1 to 6, **characterized in that** the arc furnace (1) is tiltable or rotatable.

8. Method of operating an arc furnace (1) according to Claim 1, particularly for steelmaking,
a) in which solid material (5) to be melted and at least one additive (10) are melted by means of an arc (6) of the hollow electrode (7) to a liquid melt (4),
**characterized**
b) in that during a critical melting phase (b'), in which the material (5) to be melted is partly melted down in the arc furnace (1), at least one additive (10) is conveyed through the hollow electrode (7) into the melt (4).

9. Method according to Claim 8, **characterized in that** the feeding of the at least one additive (10) begins after a predeterminable electric melting energy (WG) in the range from 30% to 90% of the total melting energy per scrap filling has been reached.

10. Method according to Claim 8, **characterized in that** the feeding of the at least one additive (10) begins after a predeterminable electric melting energy (WG) in the range from 60% to 70% of the total melting energy per scrap filling has been reached.

## Revendications

1. Four à arc notamment pour la fabrication de l'acier, comportant
a) une électrode creuse (7),
b) une 1-er convoyeur de matériau en vrac (8, 25) pour amener un matériau en vrac (10) depuis un 1-er récipient (9) de matériau en vrac à une première ouverture de remplissage (27) de l'électrode creuse (7),
c) le 1-er récipient (9) de matériau en vrac étant disposé dans une position éloignée de l'électrode,
**caractérisé en ce**
d) que le 1-er récipient (9) de matériau en vrac est disposé sur l'extrémité arrière du 1-er convoyeur de matériau vrac (8, 25) déplacé conjointement avec un bras (23) de l'électrode.

2. Four à arc (1) selon la revendication 1, **caractérisé en ce que** le 1-er convoyeur de matériau en vrac (8, 25) est relié d'une manière articulée à un dispositif (22) de réglage de l'électrode, réglable en hauteur et rotatif ou apte à basculer, pour l'électrode creuse (7).

3. Four à arc (1) selon la revendication 1 ou 2, **caractérisé en ce que** le 1-er convoyeur de matériau en vrac (8, 25) est relié selon une liaison détachable et étanche au gaz à l'ouverture de remplissage (28) de l'électrode creuse (7) par l'intermédiaire d'un bouchon creux de remplissage (27), qui établit une isolation électrique.

4. Four à arc (1) selon l'une des revendications 1 à 3, **caractérisé en ce que** le 1-er convoyeur de matériau en vrac (8, 25) est relié par l'intermédiaire d'un dispositif de convoyage (15, 27) à un 2-ème récipient (16) de matériau en vrac.

5. Four à arc (1) selon l'une des revendications 1 à 4, **caractérisé en ce que** le 1er convoyeur de matériau en vrac (8, 25) est relié à un 2-ème récipient (16) de matériau en vrac par l'intermédiaire d'un tuyau électriquement isolant (17).

6. Four à arc (1) selon l'une des revendications 1 à 5, **caractérisé en ce que** le matériau en vrac contient au moins un matériau additionnel (10).

7. Four à arc (1) selon l'une des revendications 1 à 6, **caractérisé en ce que** le four à arc (1) peut basculer ou pivoter.

8. Procédé pour faire fonctionner un four à arc (1) selon la revendication 1, notamment pour la fabrication d'acier, dans lequel
a) on fait fondre un matériau solide devant être fondu (5) et au moins un matériau additionnel (10) à l'aide d'un arc électrique (6) de l'électrode creuse (7) pour former une masse fondue liquide (4),
**caractérisé en ce**
b) que pendant une phase de fusion critique (b'), dans laquelle le matériau devant être fondu (5) est fondu partiellement dans le four à arc (1), au moins un matériau additionnel (10) est introduit par l'intermédiaire de l'électrode creuse (7) dans la masse fondue (4).

9. Procédé selon la revendication 8, **caractérisé en ce que** l'envoi d'au moins un matériau additionnel (10) commence après qu'a été atteinte une l'énergie électrique de fusion prédéterminée (W_{G}) dans la gamme de 30 % à 90 % du total de la masse fondue, en fonction du remplissage en ferrailles.

10. Procédé selon la revendication 8, **caractérisé en ce que** l'envoi du au moins un matériau additionnel (10) commence après qu'a été atteinte une l'énergie électrique de fusion prédéterminée (W_{G}) dans la gamme de 60 % à 70 % de l'énergie de la masse fondue totale, en fonction du remplissage en ferrailles.
